# EUROPEAN PATENT SPECIFICATION

(11) **EP 1 061 658 B1**
(45) Date of publication and mention of the grant of the patent: **12.09.2007**
(21) Application number: 00111953.6
(22) Date of filing: 15.06.2000
(51) Int. Cl.: H04B 1/20, H04L 12/42

(54) **Audiosystem mit grafischer Benutzerschnittstelle**
Audiosystem mit grafischen Benutzerschnittstelle
Système audio avec interface graphique utilisateur

(30) Priority: 15.06.1999 JP 16899699
(43) Date of publication of application: 20.12.2000
(73) Proprietor: YAMAHA CORPORATION, Naka-ku Hamamatsu-shi Shizuoka-ken (JP)
(72) Inventor: Narusawa, Sadayuki, Hamamatsu-shi, Shizuoka (JP); Matsuyama, Tetsuya, Hamamatsu-shi, Shizuoka (JP)
(74) Representative: Geyer, Ulrich F.

(56) References cited:
- EP-A- 0 639 895
- EP-A- 0 744 839
- WO-A-96/12255

## Description

### BACKGROUND OF THE INVENTION

### a) Field of the Invention

This invention relates to an audio system that performs a sound process based on a user preference.

### b) Description of the Related Art

Recently, an audio device (e.g., an amplifier or the like) is developed to have various kinds of parameters such as sound-field controls in addition to basic parameters like volume controls. The amplifier having various parameters should have many control switches, each of which is corresponding to each function or parameter, on its front panel in order to allow a user to set those parameters.

However, placing control switches for all parameters that can be set requires a large area on the front panel. Therefore, it might cause the enlargement of the device itself. There is a device wherein switches for only basic parameters are placed on its front panel, and other switches are placed within a sealing panel, in order to decrease mistakes of a user. In that device, however, there is no change in the number of switches required. Therefore, again, it might cause the enlargement of the device itself and will increase a cost of manufacturing.

Now developed is an audio system wherein an audio device and a personal computer (PC) are connected to each other. In such an audio system, a user can edit music and text stored in the audio system from the PC. According to such an audio system, because a user can use input means such as a keyboard, a graphical user interface (GUI) or the likes of the PC to control the audio device, various parameters can be set without placing so many switches on the audio device.

In addition to that audio system, an audio device that has a remote control unit with switches, which are not placed on a main body of the audio device, is developed. According to such an audio device, the number of the switches placed on the main body of the audio device can be reduced. Also in this kind of audio device, functions that cannot be displayed on a display of the main body may be displayed on a liquid crystal display (LCD) of the remote control unit or a television set.

However, in the above-described system, a program for displaying a setup menu of various functions on a display device of a PC and controlling those functions are stored in a memory of an audio device, and it is very difficult to change a setup display on the PC and functions being displayed. Therefore, a user cannot customize the setup display according to a preference. Moreover, once function switches are placed on the main body, the same functions are not controllable and viewed from the PC so that a user should manipulate both the main body of the audio device and the PC. Also, to confirm the setup, the user should lookup both of them.

Moreover, because the audio device that has a remote control unit with switches displays information according to picture signals transmitted from the main body, it is very difficult to change a setup display. Also, a low ability of LCD of a remote controller may worsen the operability because of bad visibility.

EP-A-0 744 839 discloses a remote control unit for use with an in-home audio player adapted to play pre-recorded music stored on a semiconductor music chip storage medium is, in a preferred embodiment, a battery powered, hand held device which enables customized music selections to be made at the audio player from a distant position. The remote control unit includes an LCD display, a series of control buttons and an infrared communications interface for transmitting to and receiving data from the audio player. A docking port is included in the audio player for mating with the remote control in order to download general content information stored in memory of the audio player regarding each of the music chips which it has loaded. A processor within the remote control guides the user through a menu driven software routine for making music selections at the player. A user scrolls through the various menus by use of a navigation pointer. Soft keys on the remote take on different functions depending on the location within the menu driven software routine. For example, a user can choose to play individual music tracks according to a category of music, musical artist or specific song. Other functions of the remote include play, pause, scan (forward and reverse) and fast scan, as well as On/Off and volume control.

Document EP-0 639 895 A2 discloses an audio equipment with basic operation buttons and additional function buttons associated with basic operations, so that inexperienced users can operate it easily by using the basic operation buttons, and experienced ones can use the additional function buttons.

### SUMMARY OF THE INVENTION

It is an object of the present invention to provide an audio system wherein a user can easily modify various parameters while miniaturizing an audio device that has various parameters to be modified.

According to the present invention, there is provided an audio system as set forth in claim 1. Preferred embodiments of the present invention may be gathered from the dependent claims.

### BRIEF DESCRIPTION OF THE DRAWINGS

FIG. 1 is a block diagram showing a structure of an audio system according to an embodiment of the invention.
FIG. 2 is a diagram showing an example of a front panel of an audio device of the embodiment.
FIG. 3 is a diagram showing an example of a rear panel of the audio device of the embodiment.
FIG. 4 is a diagram showing a structure of a personal computer connected to the audio device.
FIG. 5 is a diagram showing an example of a display in a display device controlled by a display controller.
FIG. 6 is a diagram showing another example of a display on a screen of the display device controlled by the display controller.
FIG. 7 is a diagram showing another example of a display on a screen of the display device controlled by the display controller.
FIG. 8 is a flow chart of a main process of the audio system when a user sets DSP parameters of the audio device from the personal computer.
FIG. 9 is a block diagram showing a structure of an audio system according to a modified embodiment of the invention.

### DETAILED DESCRIPTION OF THE PREFERRED EMBODIMENTS

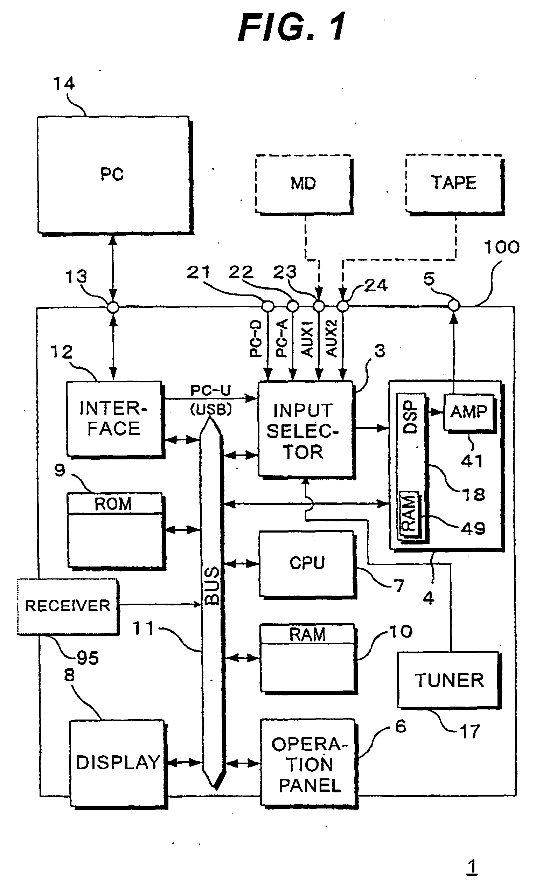

FIG. 1 is a block diagram showing the structure of an audio system according to an embodiment of the invention. An audio system 1 has a receiver 2, a personal computer (PC) 14, a mini-disk (MD) player 15 and a cassette tape deck 16.

An audio device 100 has input lines 21 to 24 that are placed on a later-described rear panel of the device. The input lines 21 to 24 are connectors to which a digital or analog signal source, e.g., a personal computer (PC), a compact disc (CD) player, a mini disk player and a cassette tape deck, can be connected. The input line 21 is a connector for connecting a digital signal source from the PC. The input line 22 is a connector for connecting an analog signal source from the PC.

The audio device 100 also has a tuner 17, an input selector 3 that selects an input from either one of the input lines 21 to 24 and has a built-in analog to digital (D/A) converter that converts analog signals input to the input selector 3 to digital signals, an audio amplifier 4 that performs various processes to an audio signal, and a speaker output 5 to which a loud speaker is connected. The audio amplifier 4 has a digital sound-field processor (DSP) unit 18 that performs a digital sound-field process and a three-dimensional (3D) sound-field process to a digital signal input from the input selector 3, an amplifier 41 that amplifies the digital signal processed in the DSP unit 18, and a random access memory (RAM) 49 that is used as a working area of the DSP unit 18 and temporally saving area of various data and parameters.

The input selector 3 selects audio signals (source signals) from various audio sources. For example, the input selector 3 selects and outputs a signal form one of input lines 21 to 24, the tuner 17 and a later-described interface 12 connected to the PC 14. The output signal of the input selector 3 is processed in the DSP unit 18 in various ways (e.g., sound-field processing) and amplified in the amplifier 4. The processed signal is output from the speaker output 5 to be reproduced by a loudspeaker.

Moreover, the audio device 100 has a control panel 6, the central processing unit (CPU) 7, a display unit 8, a read only memory (ROM) 9 and a RAM 10, which are connected to each other through a bus 11. The control panel 6 allows a user to set various functions and parameters. In this specification, to set functions or parameters may also means to modify, to control or to select functions or parameters. The display unit 8 displays functions selected with the control panel 6 and the likes.

The CPU 7 controls the audio system and performs various processes. For example, the CPU 7 controls the input selector 3 based on an outstanding status of the control panel 6 and on a later-described operational command transmitted from the PC 14.

The ROM 9 stores various data and prescribed programs for controlling the audio system 1 consisted of the audio device 100 and the PC 14. The data stored in the ROM 9 includes, at least, data relating to set parameters, and the prescribed programs include, at least, a program for transmitting setting data from the control panel 6 or the PC 14 to the audio amplifier 4 and a program that allows a user to control the audio device 100 from the PC 14 when the PC 14 is connected to the audio device 100 through the interface 12. A user can set various parameters stored in the ROM 9 through the PC 14 or the control panel 6 in the audio device 100, and the audio amplifier 4 can process an audio signal input from the input selector 3.

In this embodiment, the various parameters stored in the ROM 9 can be divided into two groups. A first group (of parameters) includes parameters that can be set by manipulating the front panel 6, and a second group (of parameters) includes parameters that can be set only by manipulating the PC 14. The parameters of both groups are described later with examples.

There is a region in the RAM 10 that a user can edit as a working area. A user can store edited parameters in that editable region. The RAM 10 and RAM 49 in the DSP unit are connected to backup power source. Therefore, they can hold their memory without main power of the audio device, for example, up to one week.

Also, the audio device 100 has the interface 12 and a PC connector 13. The interface 12 is, for example, a universal serial bus (USB) interface or other type of interface that can input and output control signals to and from the bus 11 and output an audio signal (PC-U) to the input selector 3. The PC connector 13 is, for example, a USB connector or other type of connector to which the PC 14 is connected. The audio device 4 and the PC 14 are connected each other through the interface 12 and the PC connector 13 to make up the audio system 1.

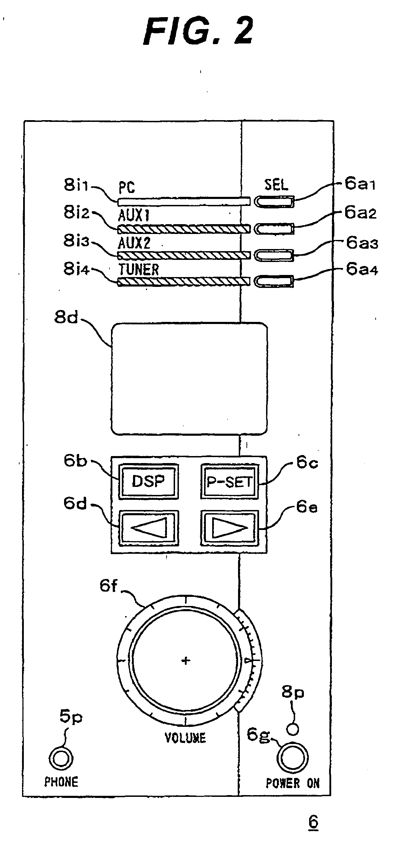

Fig. 2 is a diagram showing an example of a front panel of the audio device 100 of the embodiment.

The control panel 6 is placed on the front panel of the audio device 1 and has key-switches, a dial or the likes for various settings, controls and modifications. For example, as in the drawing, on the front panel are pushbutton-type input selection switches 6a1 to 6a4, a DSP switch 6b, a tuner setting switch 6c, DSP/tuner setting up-down switches 6d and 6e, a master volume control dial 6f and a power/standby switch 6g.

Manipulations of these switches of the control panel 6 allow a user, for example, to select one audio signal from external devices connected to the input lines 21 to 24 and the built-in tuner 17 or to change modes of various musical sound effects performed in the DSP 18. The first group of parameters stored in the ROM 9 includes the volume control, the input selection, the DSP mode selection and the tuner setup, all of which can be controlled from the control panel 6.

The DSP switch 6b is a switch for turning on and off the DSP function. When the DSP switch 6b is turned on, a user can select one of the DSP modes by manipulating the DSP/tuner setting up-down switches 6d and 6e.

The display unit 8 has various kinds of indicators and multi-function display device, for example, made of a fluorescent luminescence (FL) display element or the likes. These indicators and multi-function display device are placed on the control panel 6 or the vicinity of the control panel 6.

In this embodiment shown in Fig. 2, the front panel has a headphone jack 5p for outputting a signal and the display unit 8 including a multi-function display device 8d, a plurality of input indicators 8i1 to 8i4 and a power indicator 8p.

Each of the input indicators 8i1 to 8i4 are corresponding to each of the input selection switches 6a1 to 6a4 respectively. As shown in Fig. 2, labels "PC", "AUX1", "AUX2", and "TUNNER" are added, from the top to the bottom, to each of the input indicators 8i1 to 8i4, and one of the input indicators 8i1 to 8i4 is illuminated when corresponding input selection switch is manipulated to select an input line. For example, the input indicator 8i1 is illuminated when an input signal of a device connected to either one of the input lines 21, 22 and the PC connector 13 is selected. The input indicator 8i2 is illuminated when an input signal of a device connected to the input lines 23 is selected. The input indicator 8i3 is illuminated when an input signal of a device connected to the input lines 24 is selected. The input indicator 8i4 is illuminated when the tuner 17 is selected as a current signal source.

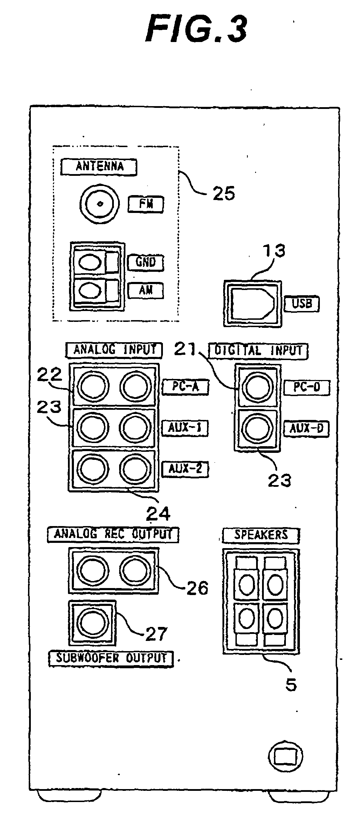

Fig. 3 is a diagram showing an example of a rear panel of the audio device 100 of the embodiment. The rear panel has: the input lines 21 to 24 that receives audio signals from various external audio sources; the speaker output having a plurality of connectors for outputting amplified signals to one or plurality of loudspeakers; the PC connector 13 for connecting with the external PC 14 by a USB cable; antenna connectors 25 connected to FM radio antenna and AM radio antenna for the tuner 17; an analog recording output 26 having connectors for left and right signals through which un-amplified analog signals are output; and a subwoofer output 27 for connecting with a subwoofer.

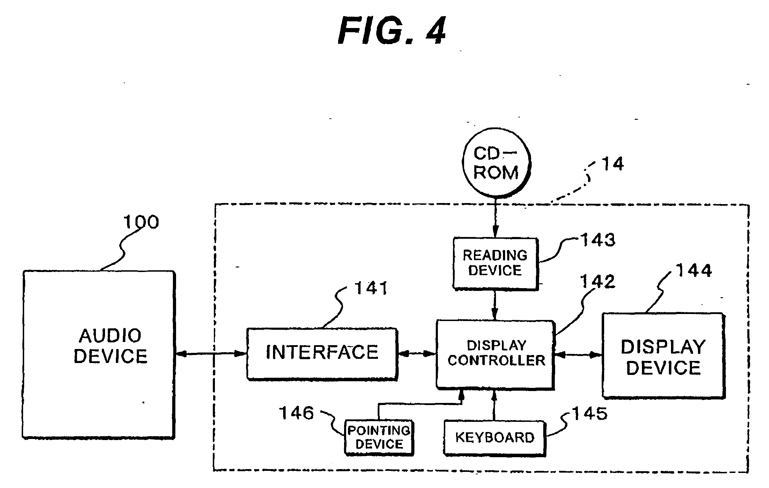

FIG. 4 is a diagram showing a structure of the PC 14 connected to the audio device 100 via the PC connector 13. As shown in the drawing, the PC 14 has an interface 141, a display controller 142, a reading device 143, a display device 144, a keyboard 145 and a pointing device (e.g., a mouse, a pad or the likes) 146. Although in the drawing, the display device 144 and the reading device 143 are configured within the PC 14, these may be configured outside the PC 14 by connecting with cables.

The interface 141 transmits and receives signals (e.g., various parameters and digital audio signals) between the audio device 100, and the PC 14 can be connected to the audio device 100 by the interface 141. The interface 141 is preferably based upon the same standards as the PC connector 13 is based upon. In this embodiment, both interface 141 and PC connector 13 are based upon USB standards. Any other interfaces may be used for the connection between the audio device 100 and the PC 14, as far as the interface can transmit/receive parameters and audio signals.

The reading device 143 is, for example, a CD-ROM drive, reads out control programs or various data recorded in a CD-ROM and transmits them to the display controller 142. A DVD-ROM drive or a floppy disk drive may be used as a reading device 143. Also, a reading device 143 may be a device that reads out control programs or various data after installing the control programs or various data from a CD-ROM or a DVD-ROM to the hard disk drive or the RAM. When the PC 14 is connected to communication networks, the control programs and data may be downloaded form a server computer connected to the networks.

The display controller 142 controls the display device 144 to display, based on the control program read out by the reading device 143, settings of parameters, the tuner 17, and volume, all of which can be set in the audio device 100.

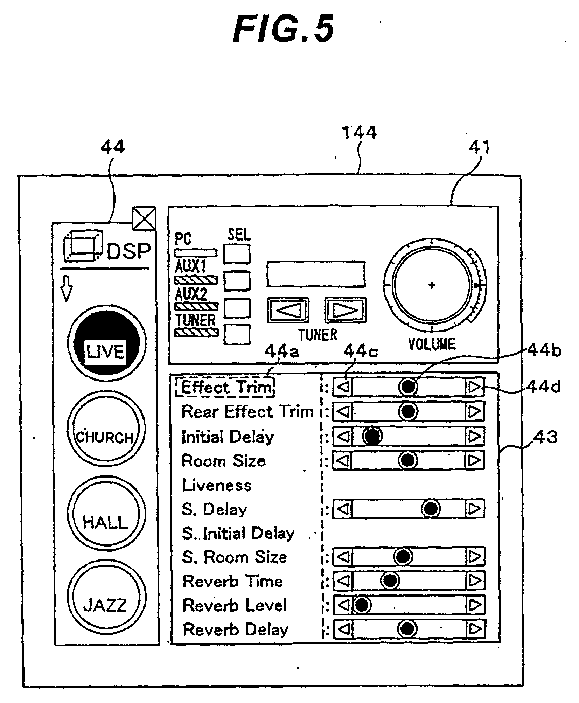

Fig. 5 is a diagram showing an example of a display on a screen of the display device 144 controlled by the display controller 143. As in the drawing, a DSP mode selection window 44 is displayed at the left side on the screen of the display device 144. A basic parameter setting window 41 is displayed at the upper right side on the screen of the display device 144, and a DSP parameter setting window 43 is displayed under the basic parameter setting window 41.

In the basic parameter setting window 41 are displayed the settings of parameters, the tuner 17, and volume, all of which can be set in the audio device 100 and an input line selected.

In the DSP mode selection window 44 are displayed DSP modes: "LIVE", "CHURCH", "HALL", and "JAZZ", all of which can also be selected in the audio device 100. The display corresponding to the selected mode is highlighted (blackened in the drawing). The highlight of the selected mode may be done by using different colors from unselected modes, enlarging the size of the display, flashing the display or the like.

The DSP parameter setting window 43 displays status of various parameters valid in the selected DSP mode. In the drawing is displayed status of parameters for: effect trim, rear effect trim, initial delay, room size, S. delay, S. room size, reverb time, reverb level and reverb delay. Status of parameters for "liveness" and "S. initial delay" is not displayed because these parameters have no use in the selected "LIVE" DSP mode.

The parameters displayed in the DSP parameter setting window 43 cannot be set on the control panel 6 of the audio device 100 and are included in the second group of parameters. These second group of parameters allows a user to set details of the mode selected by the first group of parameters in detail. In this embodiment, only using the PC 14 can modify detailed settings that specify the parameter set by the control panel 6. For example, a user can select one of the DSP modes with both of the audio device 100 and the PC 14, while the user can modify the DSP parameters only with the PC 14.

The above-described three windows display various parameters and their status, and control switches of those are also displayed nearby the display of the various parameters and the status. A volume condition display also functions as a volume control switch. A user can set a parameter by manipulating a corresponding control switch displayed on the screen of the display device 144 with the keyboard 145, the mouse 146 and/or other pointing device. Therefore, the display device 144 not only displays status of various parameters but also functions as a graphical user interface (GUI) that allows user to set displayed parameters.

For example, in the DSP selection window 44, text 44a is a name of a parameter, a mark 44b shows current status of the parameter by its position, and clickable button 44c and 44d allow a user to change the parameter by moving the mark 44b left or right. A user can set the parameter at a specific value by clicking either clickable button 44c or 44d to move the mark 44b left or right to a position corresponding to the value that the user wants to set.

In the drawing, status of parameters for "liveness" and "S. initial delay" is not displayed because these parameters are not applicable in the selected "LIVE" DSP mode. The control program determines whether each parameter is applicable in the specific DSP mode.

Parameters set by a user with the GUI displayed in the display device 144 are transmitted to the audio device 100 through the interface 141. For example, when the parameter "Effect Trim" displayed in the DSP parameter window 43 is modified, the modified parameter is transmitted to the audio device 100 via the interface 141. In the audio device 100, the audio amplifier 4 performs a process to audio signals input from the input selector 3 based on the modified parameter transmitted from the PC 14 as well as other parameters. Then the processed audio signals are output from the speaker output 5 to be reproduced by loudspeakers.

Moreover, parameters (e.g., volume control) that can be set on the control panel 6 can also be set on the screen of the display device 144 with the GUI. That is, parameters that can be set on the control panel 6 can be set both in the audio device 100 and the PC 14.

When a user sets volume of a sound with the master volume control dial 6f on the control panel 6 of the audio device 100, the value of volume parameter is transmitted to the audio amplifier 4 to process volume control to a sound reproduced, and in addition the value is transmitted to the PC 14 via the bus 11, the PC connector 13 and the interface 12. The display controller 142 of the PC 14 receives the value, and thereby controls the display device 144 to display status of volume parameter corresponding to the received value. By that, the display device 144 displays status of parameters even if settings are performed with the control panel 6 of the audio device. Therefore, the user can check all parameter settings of the audio device 100 by looking at the display of the display device 144 of the PC 14.

The contents of the display on the display device 142 (hereinafter called display style) based on the control of the display controller 144 are not limited to those shown in Fig. 5. The display controller 144 controls the display device 142 by the control program read out by the reading device 143, therefore the user can change the display style by using a CD-ROM storing other type of the control program.

For example, locations and areas of the above-described three windows 41 43 and 44 may be changed. Also, parameters may be displayed in text data (i.e., raw numbers). Further, a user may use the control program enabling many kinds of display style beforehand and select one kind of display style with the keyboard 145 or the GUI displayed on the display device 144. Furthermore, a user may use a control program that allows the user to change sizes and locations of three windows 41, 43 and 44 by manipulating the keyboard 145 and/or the pointing device 146. By using those kinds of programs, a user can customize the display style into a style wherein the user can easily check the parameters.

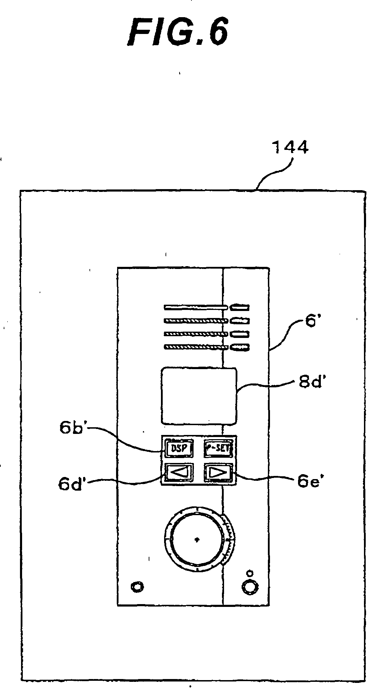

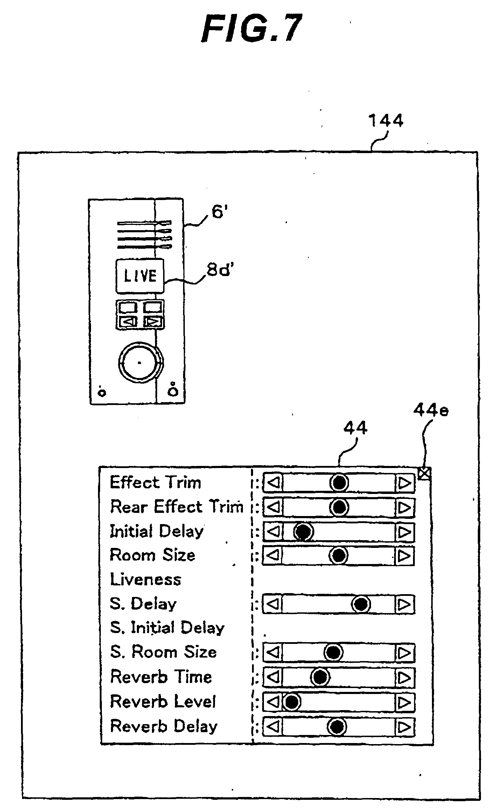

Fig. 6 and Fig. 7 are diagrams showing other examples of a display on a screen of the display device 144 controlled by the display controller 143.

First, on the screen of the display device 144 is displayed a picture 6' designed to be similar to the appearance of the control panel 6 of the audio device 100. When a user selects one of the DSP modes by manipulating the control panel 6, the user should manipulate the DSP switch 6b and the DSP/tuner setting up-down switches 6d and 6e. When a user wants to select one of the DSP modes by manipulating the picture 6', the user should manipulate switches 6b', 6d' and 6e' in the picture 6' corresponding to the DSP switch 6b and the DSP/tuner setting up-down switches 6d and 6e.

After either manipulation of the control panel 6 or the picture 6', as shown in Fig. 7, the selected mode "LIVE" is displayed in an area 8d' corresponding to the multi-function display 8d. Simultaneously, a group of detailed parameters applicable in the selected DSP mode, a display similar to the DSP parameter window 44 in Fig. 5, is displayed under the picture 6'.

When the display shown in Fig. 7 is displayed, a user can close the DSP parameter window 44 by clicking an escape mark 44e to return to the display shown in Fig. 6 wherein only the picture 6' is displayed. The display style may be tree-style like the above.

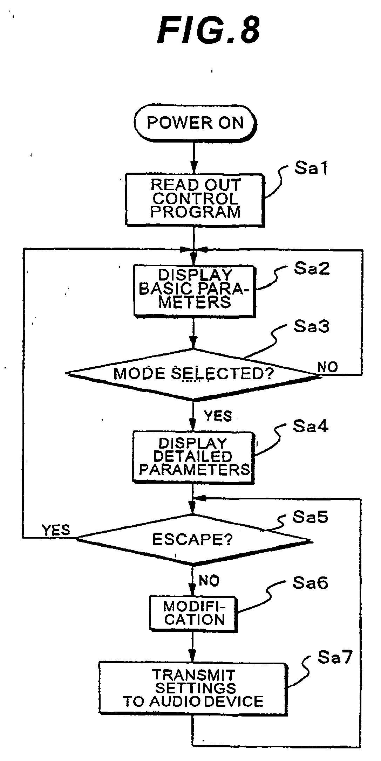

Fig. 8 is a flow chart of a main process of the audio system 1 when a user set the DSP parameters of the audio device 100 from the PC 14. In this flow, the displays shown in Fig. 6 and Fig. 7 are displayed on the screen of the display device 144.

The main process of the audio system 1 is started by turning on power switches of the audio device 100 and the PC 14, both of them being connected to each other.

At Step Sa1, upon an input of a command of the user to start the GUI functions, the reading device 143 reads out the control program stored in a CD-ROM or the like. Then the display controller 142 performs the process according to the program.

At Step Sa2, the basic parameters (the picture 6') shown in Fig. 6 are displayed on the screen of the display device 144.

At Step Sa3, the display controller 142 detects a selection of the DSP mode made by the user. When the user does not make the selection, the process returns to the Step Sa2. When the selection is detected, the process proceeds to the next Step Sa4.

At Step Sa4, the group of detailed parameters applicable in the selected DSP mode is displayed as shown in Fig. 7.

At Step Sa5, the display controller 142 detects clicking of the escape mark 44e by the pointing device 146 or the like. When the clicking is detected, the DSP parameter window 44 is closed, and the process returns to the Step Sa2. Otherwise, the process proceeds to the Step Sa6.

At Step Sa6, the display controller 142 modifies a value of a parameter based on a manipulation of the user.

At Step Sa7, the setting of the parameter modified at the Step Sa6 is transmitted to the audio device 100, wherein audio signals are processed based on the setting made by the user. Then, the process returns to the Step Sa5.

As described above, the audio system 1 according to the embodiment of the invention allows a user to set a multiplicity of parameters from the PC 14 to the audio device 100, such as a selection of the DSP mode, detailed setting of parameters for the selected DSP mode, or the like, although the control panel 6 of the audio device 100 has switches just for the basic parameters. That is, according to the embodiment, a multiplicity of parameters can be set without a front panel space for many switches assigned to the parameters, therefore the audio device 100 can be easily miniaturized.

Further, the display device 144 can display status of all the parameters on its screen, a user can check all the parameters by looking just at the screen of the display device 144. Therefore, the audio system 1 has two user interfaces; the control panel 6 of the audio device and the display device 144 of the PC 14, a user can check the status with just the display device 144.

Furthermore, the user can change the contents of the screen displayed on the display device 144 easily by changing the control program read out by the reading device 143 or with the manipulation of the keyboard 145 or the pointing device 146. Therefore, customization of the display style according to the preference allows the user to set the parameters for the audio device 100 easily.

Moreover, a user can set the basic parameters by manipulating the control panel 6 of the audio device 100 without connecting the audio device 100 to the PC 14. Therefore, the user can selectively disconnect the PC 14 from the audio device 100 when the detailed settings of the parameters are not necessary, or connect the PC 14 to the audio device 100 when the detailed settings of the parameters are necessary.

In the above-described embodiment, although the PC 14 is connected to the audio device 100, a device connected to the audio device 100 is not limited to a personal computer.

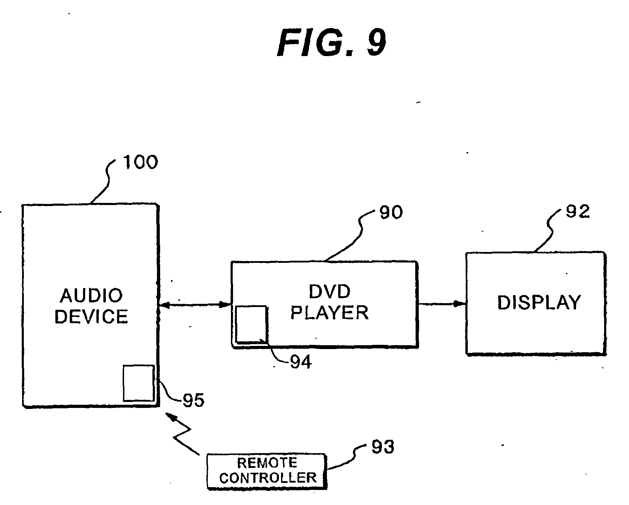

Fig. 9 is a block diagram showing a structure of an audio system according to a modified embodiment of the invention. As shown in the drawing, in this embodiment, the audio device 100 is connected to a DVD player 90. The DVD player 90 is further connected to a display 92 such as a television set, a monitor or the likes, wherein the setting windows are displayed to function as the GUI.

A controller 94 built in the DVD player 90 performs similar functions as the display controller 142 of the PC 14 based on a control program read out from a DVD-ROM. A remote controller 93 that can set both basic parameters and detailed parameters is a pointing device for manipulating GUI displayed on a screen of the display 92. In this case, the audio device 100 or the DVD player 90 has a receiver 95 for receiving the setting information transmitted from the remote controller 93. When the audio device has the receiver 95, the audio device 100 performs a digital sound-field process to audio signals based on the received setting information as well as transmits the setting information to the DVD player 90. The DVD player 90 receives the setting information, and the controller 94 therein controls the display of the display 92 based on the received setting information.

The present invention has been described in connection with the preferred embodiments.

## Claims

1. An audio system (1) comprising:
an audio apparatus (100) comprising
a processor (7) that is adapted to perform a sound process to an audio signal based on one or some of a first group of parameters and a second group of parameters which specifies details of said first group of parameters wherein only a graphical user interface (144) of a control apparatus (14) is adapted to set said second group of parameters,
a switch (6, 6a1-6a4, 6b-6g) with which a user can set only one or some of said first group of parameters,
a first interface (12) to which an external device is connected, and
a first display device (8) that is adapted to display said first group of parameters,
wherein the switch is adapted to modify the first group of parameters; and
the control apparatus (14) comprising
a second interface (141) to which said audio apparatus (100) is connected,
a second display device (144) that is adapted to display said second group of parameters and to display the first group of parameters through the second interface (141),
a reading device (143) that is adapted to read a program stored in a storage medium (9),
a display controller (142) that is adapted to control a display of said second display device (144) based on said program read by said reading device (143), and
the graphical user interface displayed on said second display device (144) for setting one or some of said second group of parameters cooperating with said second display device (144), wherein said display controller (142) is further adapted to control said graphical user interface displayed on said second display device (144) for setting one or some of said first group of parameters cooperating with said second display device (144) based on an operation of the switch by a user,
a transmitter that is adapted to transmit the setting of said second group of parameters made by said graphical user interface to said audio apparatus (100),
wherein said audio apparatus (100) is adapted to modify a value of the first group of parameters based on the setting of the parameters set by the switch and by the graphical user interface displayed on the second display device (144) and to display the modified value of the first group of parameters on the first display device (8), and the audio apparatus (100) is adapted to be operated based on the first group of parameters and the second group of parameters.

2. An audio system according to claim 1, wherein said control apparatus (14) further comprises an input device (145, 146) that is adapted to input a command of a user, and
said display controller (142) is adapted to modify a display of said second display device (144) based on the command input from said input device (145, 146).

3. An audio system according to claim 1, wherein said second display device (144) is adapted to display a parameter of the first group of parameters and the second group of parameters each of which specifies a detail of said parameter of the first group.

4. An audio system according to claim 3, wherein said second display device (144) is adapted to display a status of a valid parameter of the second group of parameters.

## Patentansprüche

1. Ein Audiosystem (1), welches folgendes aufweist:
Eine Audiovorrichtung (100), welche folgendes aufweist:
einen Prozessor (7), welcher angepasst ist, um einen Klangprozess auf ein Audiosignal basierend auf einem oder mehreren einer ersten Gruppe von Parametern und einer zweiten Gruppe von Parametern, welche Details der ersten Gruppe von Parametern spezifiziert, durchzuführen, wobei nur eine graphische Benutzerschnittstelle (144) einer Steuervorrichtung (14) angepasst ist, um die zweite Gruppe von Parametern einzustellen,
einen Schalter (6, 6a1-6a4, 6b-6g), mit welchem der Benutzer nur einen oder mehrere der ersten Gruppe von Parametern einstellen kann,
eine erste Schnittstelle (12), mit welcher eine externe Einrichtung verbunden ist, und
eine erste Anzeigeeinrichtung (8), welche angepasst ist, um die erste Gruppe von Parametern anzuzeigen, wobei der Schalter angepasst ist, um die erste Gruppe von Parametern zu modifizieren, und
wobei die Steuervorrichtung (14) folgendes aufweist:
eine zweite Schnittstelle (141), mit welcher die Audiovorrichtung (100) verbunden ist,
eine zweite Anzeigeeinrichtung (144), welche angepasst ist, um die zweite Gruppe von Parametern anzuzeigen, und um die erste Gruppe von Parametern durch die zweite Schnittstelle (141) anzuzeigen,
eine Ausleseeinrichtung (143), welche angepasst ist, um ein Programm auszulesen, welches in einem Speichermedium (9) gespeichert ist,
eine Anzeigesteuerung (142), welche angepasst ist, um eine Anzeige der zweiten Anzeigeeinrichtung (144) basierend auf dem Programm, welches durch die Ausleseeinrichtung (143) ausgelesen wurde, zu steuern, und
die graphische Benutzerschnittstelle, welche auf der zweiten Anzeigeeinrichtung (144) angezeigt wird zum Einstellen von einem oder mehreren der zweiten Gruppe von Parametern, so dass diese mit der zweiten Anzeigeeinrichtung (144) kooperieren, wobei die Anzeigesteuerung (142) ferner angepasst ist, um die graphische Benutzerschnittstelle, welche auf der zweiten Anzeigeeinrichtung (144) angezeigt wird, zu steuern, und zwar zum Einstellen von einem oder mehreren der ersten Gruppe von Parametern, so dass diese mit der zweiten Anzeigeeinrichtung (144) kooperieren, und zwar basierend auf einer Betätigung des Schalters durch einen Benutzer,
einen Übertrager, welcher angepasst ist, um die Einstellung der zweiten Gruppe von Parametern zu übertragen, welche durch die graphische Benutzerschnittstelle zu der Audiovorrichtung (100) gemacht wurde,
wobei die Audiovorrichtung (100) angepasst ist, um einen Wert der ersten Gruppe von Parametern basierend auf der Einstellung der Parameter, welche durch den Schalter und die graphische Benutzerschnittstelle, welche auf der zweiten Anzeigeeinrichtung (144) angezeigt wurde, zu modifizieren, und um den modifizierten Wert der ersten Gruppe von Parametern auf der ersten Anzeigeeinrichtung (8) anzuzeigen, und wobei die Audiovorrichtung (100) angepasst ist, um basierend auf der ersten Gruppe von Parametern und der zweiten Gruppe von Parametern betrieben zu werden.

2. Ein Audiosystem gemäß Anspruch 1, wobei die Steuervorrichtung (14) ferner eine Eingabeeinrichtung (145, 146) aufweist, welche angepasst ist, um einen Befehl eines Benutzers einzugeben, und
wobei die Anzeigesteuerung (142) angepasst ist, um eine Anzeige der zweiten Anzeigeeinrichtung (144) basierend auf der Befehlseingabe von der Eingabeeinrichtung (145, 146) zu modifizieren.

3. Ein Audiosystem gemäß Anspruch 1, wobei die zweite Anzeigeeinrichtung (144) angepasst ist, um einen Parameter der ersten Gruppe von Parametern und der zweiten Gruppe von Parametern anzuzeigen, welche jeweils ein Detail des Parameters der ersten Gruppe spezifizieren.

4. Ein Audiosystem gemäß Anspruch 3, wobei die zweite Anzeigeeinrichtung (144) angepasst ist, um einen Status eines gültigen Parameters der zweiten Gruppe von Parametern anzuzeigen.

## Revendications

1. Système audio comprenant :
un dispositif audio (100) comprenant :
un processeur (7) qui est adapté à réaliser un traitement du son en un signal audio sur la base de l'un ou de plusieurs d'un premier groupe de paramètres et d'un second groupe de paramètres qui spécifient des détails du premier groupe de paramètres, dans lequel seule une interface graphique d'utilisateur (144) d'un dispositif de commande (14) est adaptée à établir le second groupe de paramètres ;
un commutateur (6, 6a1-6a4, 6b-6g) avec lequel l'utilisateur peut établir seulement un ou plusieurs du premier groupe de paramètres ;
une première interface (12) à laquelle un dispositif externe est connecté ; et
un premier dispositif d'affichage (8) qui est adapté à afficher le premier groupe de paramètres, le commutateur étant adapté à modifier le premier groupe de paramètres ; et
le dispositif de commande (14) comprenant :
une seconde interface (141) à laquelle le dispositif audio (100) est connecté ;
un second dispositif d'affichage (144) qui est adapté à afficher le second groupe de paramètres et à afficher le premier groupe de paramètres par l'intermédiaire de la seconde interface (141) ;
un dispositif de lecture (143) qui est adapté à lire un programme mémorisé dans un milieu de mémorisation (9) ;
un contrôleur d'affichage (142) qui est adapté à contrôler un affichage du second dispositif d'affichage (144) sur la base du programme lu par le dispositif de lecture (143), et l'interface graphique d'utilisateur affichée sur le second dispositif d'affichage (144) pour établir un ou plusieurs du second groupe de paramètres coopérant avec le second dispositif d'affichage (144), dans lequel le contrôleur d'affichage (142) est en outre adapté à commander l'interface graphique d'utilisateur affichée sur le second dispositif d'affichage (144) pour établir un ou plusieurs du premier groupe de paramètres coopérant avec le second dispositif d'affichage (144) sur la base d'une action sur le commutateur par un utilisateur ;
un émetteur qui est adapté à émettre le réglage du second dispositif d'affichage (144) fait par l'interface graphique d'utilisateur vers le dispositif audio (100) ;
dans lequel le dispositif audio (100) est adapté à modifier la valeur du premier groupe de paramètres sur la base du réglage des paramètres établi par le commutateur et par l'interface graphique d'utilisateur affichée sur le second dispositif d'affichage (144) et à afficher la valeur modifiée du premier groupe de paramètres sur le premier dispositif d'affichage (8), et le dispositif audio (100) est adapté à être actionné sur la base du premier groupe de paramètres et du second groupe de paramètres.

2. Système audio selon la revendication 1, dans lequel
le dispositif de commande (14) comprend en outre un dispositif d'entrée (145, 146) qui est adapté à introduire un ordre d'un utilisateur ; et
le contrôleur d'affichage (142) est adapté à modifier l'affichage du second dispositif d'affichage (144) sur la base de l'entrée de commande du dispositif d'entrée (145, 146).

3. Système audio selon la revendication 1, dans lequel le second dispositif d'affichage (144) est adapté à afficher un paramètre du premier groupe de paramètres et du second groupe de paramètres dont chacun spécifie un détail du paramètre du premier groupe.

4. Système audio selon la revendication 1, dans lequel le second dispositif d'affichage (144) est adapté à afficher un état d'un paramètre valide du second groupe de paramètres.
